# EUROPÄISCHE PATENTSCHRIFT

(11) **EP 1 359 593 B1**
(45) Veröffentlichungstag und Bekanntmachung des Hinweises auf die Patenterteilung: **19.05.2004**
(21) Anmeldenummer: 02006227.9
(22) Anmeldetag: 20.03.2002
(51) Int. Cl.: G12B 21/02, G01B 7/34, B81C 1/00, B81B 3/00, B81B 1/00

(54) **SPM-Sensor und Verfahren zur Herstellung desselben**
SPM sensor and method for its manufacture
Capteur pour la SPM et procedé pour sa fabrication

(43) Veröffentlichungstag der Anmeldung: 05.11.2003
(73) Patentinhaber: Nanoworld AG, 2007 Neuchâtel (CH)
(72) Erfinder: Lutter, Stefan, 2000 Neuchatel (CH)
(74) Vertreter: Klocke, Peter, Dipl.-Ing.

(56) Entgegenhaltungen:
- EP-A- 0 413 042
- EP-A- 0 922 930
- US-A- 5 466 948
- US-A- 5 811 017
- PATENT ABSTRACTS OF JAPAN vol. 1997, no. 08, 29. August 1997 (1997-08-29) -& JP 09 105755 A (OLYMPUS OPTICAL CO LTD), 22. April 1997 (1997-04-22)

## Beschreibung

Die vorliegende Erfindung betrifft einen SPM-Sensor sowie ein Verfahren zur Herstellung derartiger Sensoren.

Raster-Kraft-Mikroskope (Scanning Probe Microscope (SPMs)) sind allgemein bekannt und werden in der Praxis benutzt, um mit feinen Sensoren in atomarer Auflösung die Oberfläche von Proben abzutasten. SPMs umfassen sogenannte STM (Scanning Tunneling Microscope) und AFM (Atomic Force Microscope), die ebenfalls allgemein bekannt sind.

Bei allen diesen Mikroskopen werden Sensoren eingesetzt, in die aus einem Mikrobiegebalken, im nachfolgenden Cantilever genannt, bestehen, der an seinem einem Ende ein Halteelement und am anderen Ende eine Sensorspitze aufweist, mit der die Probe abgetastet wird. Diese an dem freien Ende des Cantilevers angeordnete Sensorspritze kann dabei so ausgeformt sein, dass sie das freie Ende überragt oder nicht. Der Einsatz der jeweiligen Sensoren hängt von dem Einbau in dem jeweiligen Mikroskop ab, wobei es Situationen gibt, bei denen die Spitze in dem Mikroskop verdeckt ist, so dass ein Justieren schlecht durchgeführt werden kann.

Derartige vorstehend beschriebene SPM-Sensoren sind beispielsweise aus der US 5811 017 bekannt. Dort ist das Ausgangsmaterial ein zusammengesetztes Material mit Silizium auf einem Isolator (Silicon on Insulator (SOI)), bei dem mindestens drei Lithographieschritte zur Erzeugung eines SPM-Sensors mit Halteelement, rechteckigem Cantilever und Sensorspitze aus Silizium erforderlich sind. Die Verwendung von SOI-Materialien als Ausgangsmaterial ist wesentlich teurer als monokristallines Silizium. Zur Erzeugung von zwei der drei Begrenzungsflächen der Sensorspitze ist bei diesem Verfahren ein teurer Einzelwafer-Trockenätzprozess erforderlich.

Aus der US 5021 364 ist ebenfalls ein SPM-Sensor bekannt, bei dem eine Siliziumsensorspitze beispielsweise auf einem Nitrid-Cantilever angeordnet ist. Das Cantilevermaterial wird abgeschieden und ist somit kein Bulkmaterial. Auch hier werden teure Einzelwafer-Trockenätzprozesse eingesetzt, um die Siliziummembran durchzuätzen und einen Cantilever bzw. zwei der drei Begrenzungsflächen der Sensorspitze zu erzeugen.

Aus der EP 0 413 042 ist ein monolithischer SPM-Sensor bekannt, dessen Spitze kegelförmig ausgebildet ist. Die Herstellung des Cantilevers und der Spitze erfolgt durch zwei getrennte Lithographie- und Formgebungsschritte. Die Herstellung der Spitze geschieht durch Unterätzung der Maske für die Spitze. Durch das in dieser Schrift angegebene Verfahren ist es nur möglich, eine kegelförmige Spitze herzustellen. Durch die Verwendung von zwei Masken für zwei getrennte Lithographie- und Formgebungsschritte ist die Herstellung eines derartigen SPM-Sensors wesentlich aufwendiger.

In Patent Abstract of Japan, vol. 1997, no. 08, 29. August 1997 betreffend JP 09 105755 A (OLYMPUS OPTICAL CO LTD) wird ein Sensor dargestellt, der als Ausgangsmaterial ein zusammengesetztes SOI-Substrat verwendet. Dort sind nur der Cantilever und die dreiflächige Sensorspitze einstückig aus monokristallinem Silizium gebildet. Die Herstellung erfolgt durch Trockenätzen.

Der vorliegenden Erfindung liegt daher die Aufgabe zugrunde, einen SPM-Sensor aus einem möglichst kostengünstigen Ausgangsmaterial mit möglichst wenig Verfahrensschritten herzustellen, um die Herstellkosten zu minimieren.

Diese Aufgabe wird erfindungsgemäß durch einen SPM-Sensor mit den Merkmalen des Anspruchs 1 sowie durch ein Verfahren mit den Merkmalen des Anspruchs 6 gelöst. Weitere vorteilhafte Ausgestaltungen sind den jeweiligen rückbezogenen Unteransprüchen zu entnehmen.

Danach besteht bei dem SPM-Sensor der gesamte SPM-Sensor einschließlich dem Halteelement, der Cantilever und die dreiflächige Sensorspitze, aus monokristallinem (100)-Silizium. Ein derartiger Sensor zeichnet sich dadurch aus, dass er besonders kostengünstig durch teilweise gleiche Verfahrensschritte mit einer das freie Ende überragenden Sensorspritze oder mit einer von dem freien Ende gedeckten Sensorspitze hergestellt werden kann und zusätzlich relativ kostengünstige Verfahrensschritte hierfür eingesetzt werden können.

Durch die Art der Herstellung entsteht ein SPM-Sensor mit einem im wesentlichen rechteckigen Cantilever der vorteilhafterweise in der Draufsicht einen rechteckigen Armbereich und einen daran anschließenden spitz zulaufenden dreieckigen Spitzenbereich aufweist. Der Spitzenbereich wird durch schräge langsam ätzende Kristallebenen gebildet und schließt einen Winkel von ungefähr 62° ein. Der Armbereich ist bei einer Variante (überragende Sensorspitze) an den Seitenflächen durch eine (111)-Kristallebene begrenzt. Auf der Oberseite des Cantilevers bildet sich dabei die Sensorspritze aus (100)-Silizium mit drei Flächen aus, von denen zwei Flächen von dem Cantilever weg und eine Fläche in Richtung Armbereich zeigen. Dabei werden die beiden Flächen durch die beiden schrägen langsam ätzenden Kristallebenen und die eine Fläche durch eine (111)-Kristallebene bestimmt.

Gemäß einer Ausbildung, bei der die Sensorspitze das Cantileverende nicht überragt, bildet die Schnittkante der beiden von dem Cantilever wegzeigenden Flächen mit der Cantileverunterseite einen Winkel von ungefähr 70°.

Bei einer anderen Ausführungsform bei der die Sensorspitze das Cantileverende überragt bildet die Schnittkante der beiden von dem Cantilever wegzeigenden Flächen mit der Cantileveroberseite einen Winkel von ungefähr 70°.

Die Winkel von ungefähr 70° ergeben sich aus der räumlichen Anordnung der einzelnen Gitterebenen der Siliziumkristalls. Schwankungen der Winkelgröße können sich nur in geringen Bereichen +/- 10° durch die Temperaturführung und/oder die Konzentration der Ätzchemikalie bei dem Ätzvorgang ergeben. Entsprechendes gilt auch in geringem Mäße bei dem Winkel von ungefähr 62° (+/- 2°).

Die Besonderheit des gesamten Verfahrens darin besteht, dass ausgehend von einem monokristallinen (100)-Siliziumwafer der Prozess durchgeführt wird und damit der gesamte Herstellungsprozess in ein Batchlauf erfolgen kann. Des weiteren werden gegenüber dem Stand der Technik nur ein einziger Trockenätzprozess und dafür mehr kostengünstige nasschemische Ätzprozesse durchgeführt. Bei der Herstellung des SPM-Sensors mit überstehender Sensorspitze werden alle Lithographieschritte zur Herstellung von Halteelement, Cantilever und Spitze von der gleichen, der Sensorspitze gegenüber liegenden Seite, der Waferunterseite durchgeführt. Als Waferoberseite wird die Seite verstanden, auf der sich die Sensorspitze ausbildet. Entsprechend ist die gegenüberliegende Seite die Waferunterseite. Abdünnungsschritte werden in diesem Zusammenhang nicht als Formgebungsschritte verstanden. Auf der Waferoberseite erfolgt bei dem Sensor mit überstehender Sensorspitze lediglich ein ganzflächiger Abdünnschritt mit dem die Cantileverdicke eingestellt wird und bei dem sich die Sensorspitze ausbildet.

Zur Erläuterung der Erfindung wird diese nachfolgend in Verbindung mit den begleitenden Zeichnungen erläutert. Es stellen dar:

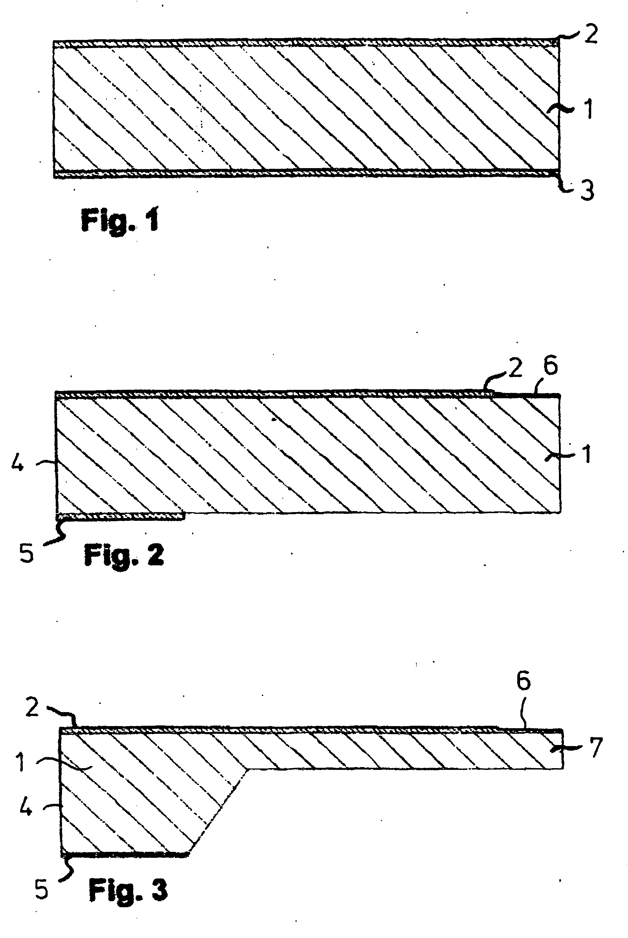

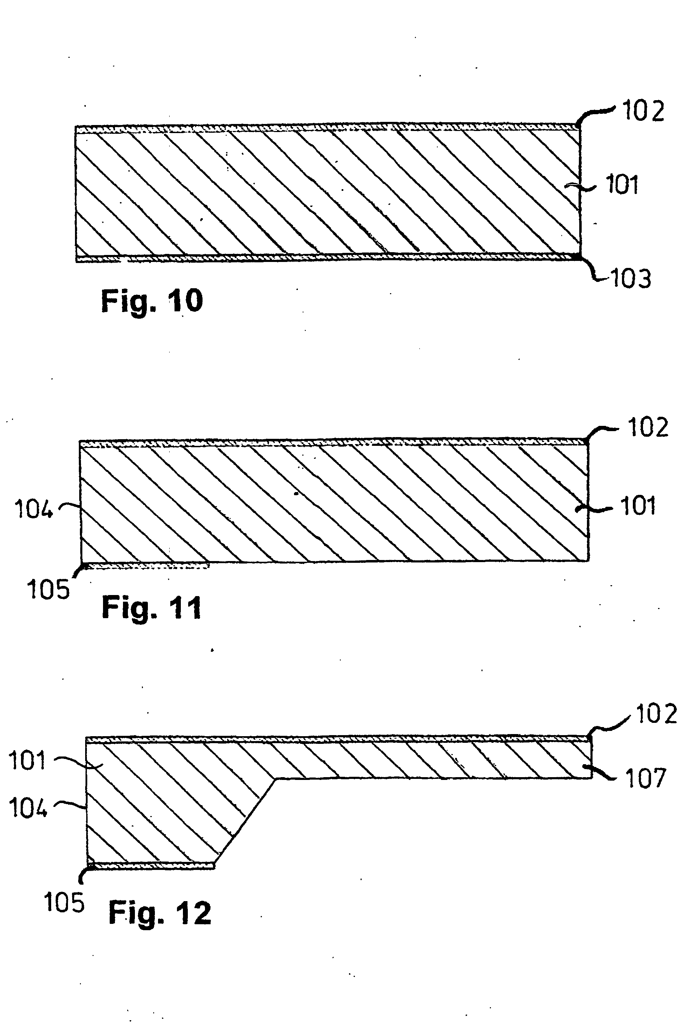

Figuren 1 bis 9a die einzelnen Schritte zur Herstellung eines SPM-Sensors mit einer das freie Ende des Cantilevers nicht überragenden Sensorspitze und die Figuren 10 bis 19 die einzelnen Schritte zur Herstellung eines SPM-Sensors mit einer das freie Ende des Cantilevers überragenden Sensorspitze.

Beide Verfahren zur Herstellung der beiden verschiedenen SPM-Sensoren weisen einige übereinstimmende Schritte auf.

Figur 1 zeigt einen (100)-Siliziumwafer 1 bei dem die Oberseite mit einer Siliziumoxidschicht 2 und die Unterseite mit einer Siliziumoxidschicht 3 überzogen ist. Als nächstes wird, wie in Figur 2 dargestellt, die Maske zur Herstellung des Halteelements 4 erzeugt, in dem ein Photolack auf der Waferunterseite aufgebracht und strukturiert wird und die Photomaske in die Siliziumoxidschicht 3 übertragen wird. Die Siliziumoxidschicht 3 auf der Waferunterseite wird dabei teilweise entfernt, so dass nur der Bereich 5 für das Halteelement 4 bestehen bleibt. Die Waferoberseite mit der Siliziumoxidschicht 2 wird von einem Schutzlack abgedeckt. Alle aufgebrachten Photolacke werden nach dem Entfernen der Siliziumoxidschicht 3 ebenfalls weggenommen.

Im nächsten Schritt wird zur Erzeugung der Maske zur Herstellung des Cantilevers und der Cantileverspitze ein Photolack auf der Waferoberseite aufgebracht und strukturiert sowie die Photomaske in das Siliziumoxid übertragen. Die Siliziumoxidschicht 2 auf der Waferoberseite wird dabei teilweise in dem Bereich 6 abgedünnt. Anschließend wird der Photolack entfernt. Figur 2 zeigt das Ergebnis dieser Verfahrensschritte.

Nach dem Abdünnen des Siliziumwafers 1 durch nasschemisches Ätzen, beispielsweise mittels Kalilauge (KOH), von der Waferunterseite entsteht eine dünne Siliziummembran 7 wie sie in der Figur 3 dargestellt ist. Dabei wird auch gleichzeitig die Siliziumoxidschicht 5 abgedünnt. Mit der Herstellung der Siliziummembran 7 entsteht auch das Halteelement 4. Die Dicke der Siliziummembran 7 wird so gewählt, dass sie in der Summe mindestens aus der gewünschten Höhe der später zu erstellenden Sensorspitze und der gewünschten endgültigen Dicke des Cantilevers des SPM-Sensors entspricht.

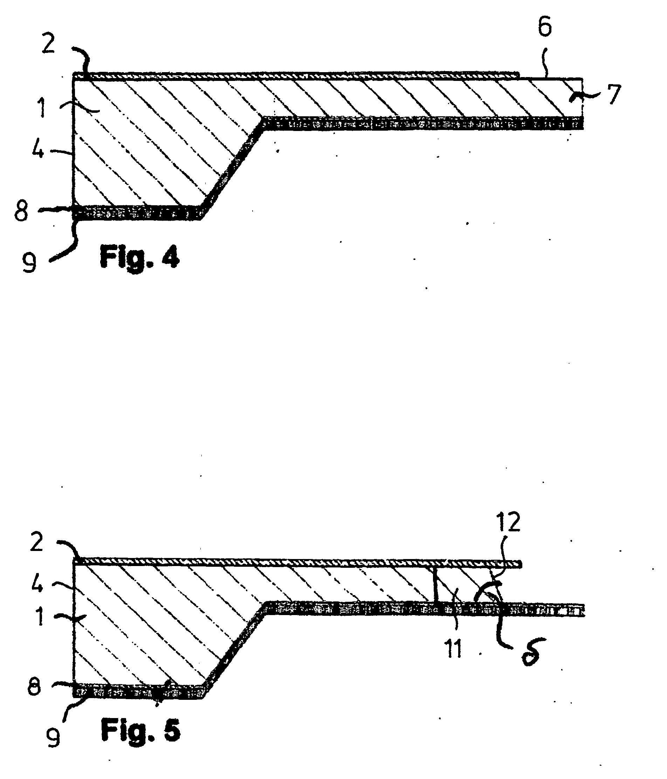

Im nächsten Schritt, wird auf der Rückseite des Siliziumwafers 1 erneut eine Siliziumoxidschicht 8 und daran anschließend eine Siliziumnitridschicht (SiₓN_{y}) 9 aufgebracht. Dann wird die Siliziumoxidschicht 2 auf der Oberseite und die Siliziumnitridschicht 9 auf der Unterseite abgedünnt, wobei die aus Siliziumoxid bestehende Maske zur Herstellung des Cantilever auf der Waferoberseite auf das Siliziumsubstrat 1 in dem Bereich 6 übertragen wird (Figur 4).

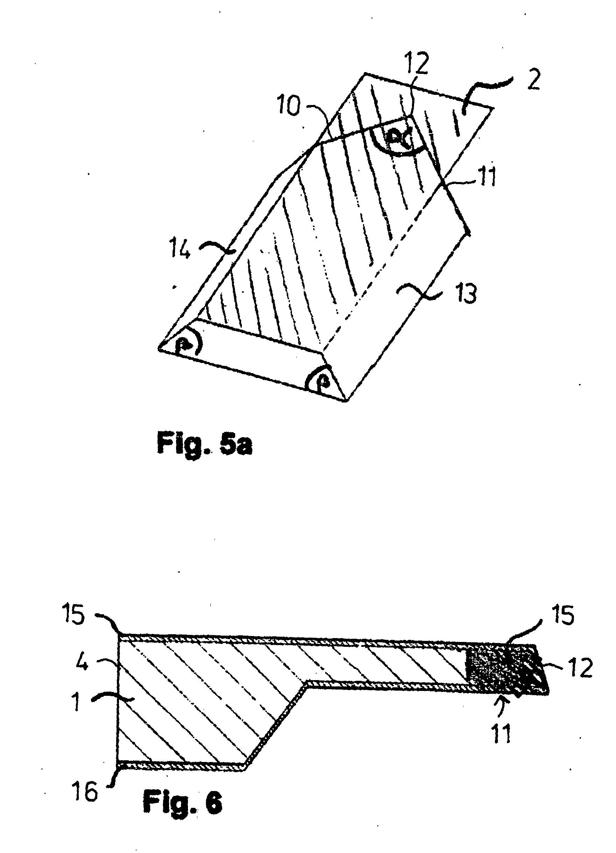

Durch weiteres teilweises Entfernen der Siliziummembran 7 in einem nasschemischen Ätzschritt mittels beispielsweise einer KOH-Lösung wird die in (110)-Richtung zeigende Cantilevermaske aus der Siliziumoxidschicht 2 derart unterätzt, dass sich der dabei ausbildende Cantilever am freien Ende aus zwei sich schneidenden, langsam ätzenden Ebenen 10, 11 begrenzt wird. In dem Ausführungsbeispiel handelt es sich um (014)-Ebenen. Ihre Ebenen bilden einen Winkel α von ungefähr 62°. Figur 5a zeigt in perspektivischer Ansicht die Ausbildung der Cantileverspitze 12. Die Schnittgerade dieser Ebenen, d.h. die vordere Begrenzung des Cantilevers, die die vordere Kante 12 bildet, bildet mit der die Cantileverunterseite begrenzenden (100)-Kristallebene einen Winkel δ, der ungefähr 70° beträgt. Gleichzeitig bilden sich dabei die Seitenflächen 13, 14 mit dem Winkel β aus, die aus (111)-Kristallebenen bestehen. Die Ausbildung der Sensorspitze kann damit reproduzierbar eingestellt werden. Figur 5 zeigt das Ergebnis dieses Schrittes in der Schnittdarstellung und Figur 5a in perspektivischer Ansicht.

Im nächsten Schritt werden alle Siliziumoxid- und Siliziumnitridschichten entfernt und erneut eine Siliziumoxidschicht 15 bzw. 16 auf der Waferober und ―unterseite aufgebracht. Gleichzeitig werden dabei auch die Flächen 10 bis 14 mit einer entsprechenden Siliziumoxidschicht überzogen. Das Ergebnis ist in der Schnittdarstellung in Figur 6 gezeigt.

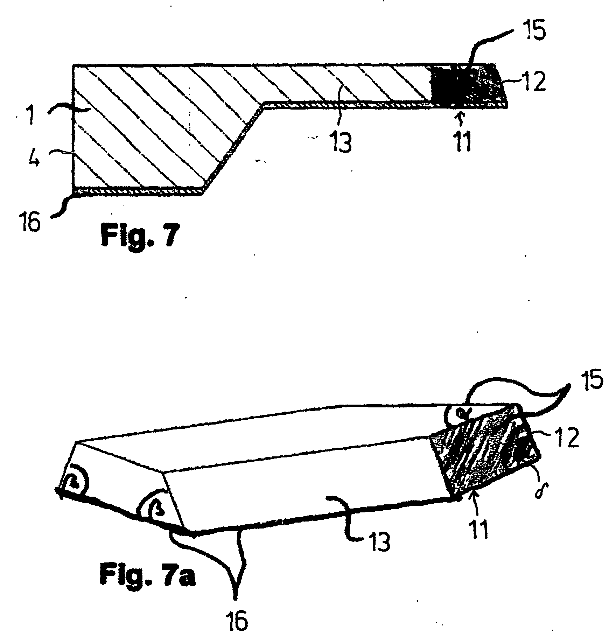

Anschließend wird der vorstrukturierte Siliziumwafer, wie in Figuren 7 und 7a gezeigt, einem gerichteten, winkelabhängigen Trockenätzschritt zur Entfernung von bestimmten Teilen der aufgebrachten Siliziumoxidschicht unterzogen. Der Trockenätzschritt wird dabei so gewählt, dass die Siliziumoxidschicht 15 auf der Waferoberseite sowie die auf den Flächen 13 und 14 aufgebrachten Siliziumoxidschichten entfernt werden, während die beiden, die beiden offenen Seiten des Cantilevers begrenzenden Ebenen 10, 11, die zu den (100)-Kristallebenen der Waferoberseite in einem steileren Winkel stehen als die (111)-Kristallebenen 13, 14, von der Siliziumoxidschicht bedeckt bleiben. Auch die Unterseite des Siliziumwafers bleibt von der Oxidschicht 16 bedeckt.

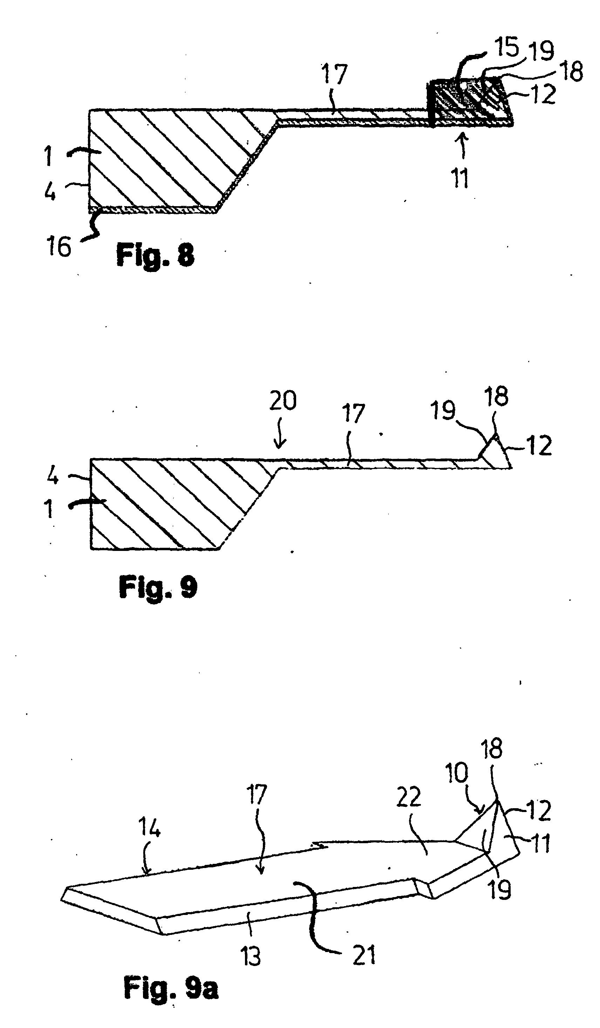

In einem nachfolgenden nasschemischen Ätzschritt, beispielsweise mit Kalilauge (KOH), wird der Siliziumwafer auf die gewünschte Dicke des Cantilevers 17 abgedünnt. Am freien Ende des Cantilevers 17 bildet sich dabei eine Sensorspitze 18 aus, die durch drei Flächen begrenzt wird. Zwei dieser Flächen sind Teile der sich schneidenden Ebenen 10, 11 am freien Ende des Cantilevers. Die dritte Ebene besteht aus einer sich beim Abdünnen des Cantilevers ausbildenden (111)-Kristallebene 19. Figur 8 zeigt das Ergebnis dieses Schrittes, wobei die Siliziumoxidschichten auf den Ebenen 10, 11 stehen bleiben. Diese werden in dem nächsten Schritt entfernt (Figur 9). Da im Zuge des nasschemischen Ätzschrittes auch die seitlichen Begrenzungsflächen des Cantilevers 17 geätzt werden, während die in das offene Cantileverende begrenzenden Ebenen 10, 11 von einer Siliziumoxidschicht geschützt werden, bildet sich eine Cantilevergeometrie aus, wie sie in der Figur 9a dargestellt ist. Die seitlichen Begrenzungsflächen 13, 14 des rechteckigen Teils bestehen jetzt nicht mehr aus (111)-Kristallebenen sondern flache Ebenen.

Gemäß diesem Verfahren wird ein SPM-Sensor aus monokristallinem (100)-Silizium erstellt, der einen rechteckigen Cantilever 17 aufweist, dessen offenes Ende durch ein Dreieck abgeschlossen ist. Am Ende dieses Dreiecks sitzt eine durch zwei Seiten 10, 11 dieses Dreiecks, sowie eine (111)-Kristallebene bestimmten Sensorspitze 18 aus Silizium. Die entstandene Sensorspitze 18 kann durch eine weitere Niedertemperaturoxidation, z.B. unter 1000° C, und anschließendem Entfernen der aufgewachsenen Oxidschicht angeschärft werden. Der SPM-Sensor weist eine Spitze 18 auf, die das freie Ende des Cantilevers 19 nicht überragt.

Die Figuren 10 bis 19 zeigen die Herstellung eines SPM-Sensors, dessen Sensorspitze das Cantileverende überragt.

Die ersten beiden Verfahrensschritte, deren Ergebnisse in den Figuren 10 und 11 dargestellt sind, sind mit den bereits vorstehend beschriebenen Verfahrensschritten im Zusammenhang mit den Figuren 1 und 2 identisch. Infolge dessen befindet sich in der Figur 11 auf dem Siliziumwafer 4 eine Siliziumoxidschicht 102 auf der Oberseite und ein verbleibender Rest 105 von der auf der Unterseite angeordneten Siliziumoxidschicht 103 zur Bildung des Halteelements 104. Im nächsten Schritt erfolgt entsprechend dem Vorgang im Zusammenhang mit der Figur 3 das Abdünnen des Siliziumwafers von der Waferunterseite her, so dass eine Siliziummembran 107 entsteht. Mit diesem Schritt wird das Halteelement 104 erzeugt. Die Dicke der Siliziummembran 107 wird so gewählt, dass sie der Summe aus mindestens der gewünschten Höhe der Sensorspitze und der gewünschten endgültigen Dicke des Cantilevers des SPM-Sensors entspricht. Das Ergebnis ist in Figur 12 dargestellt.

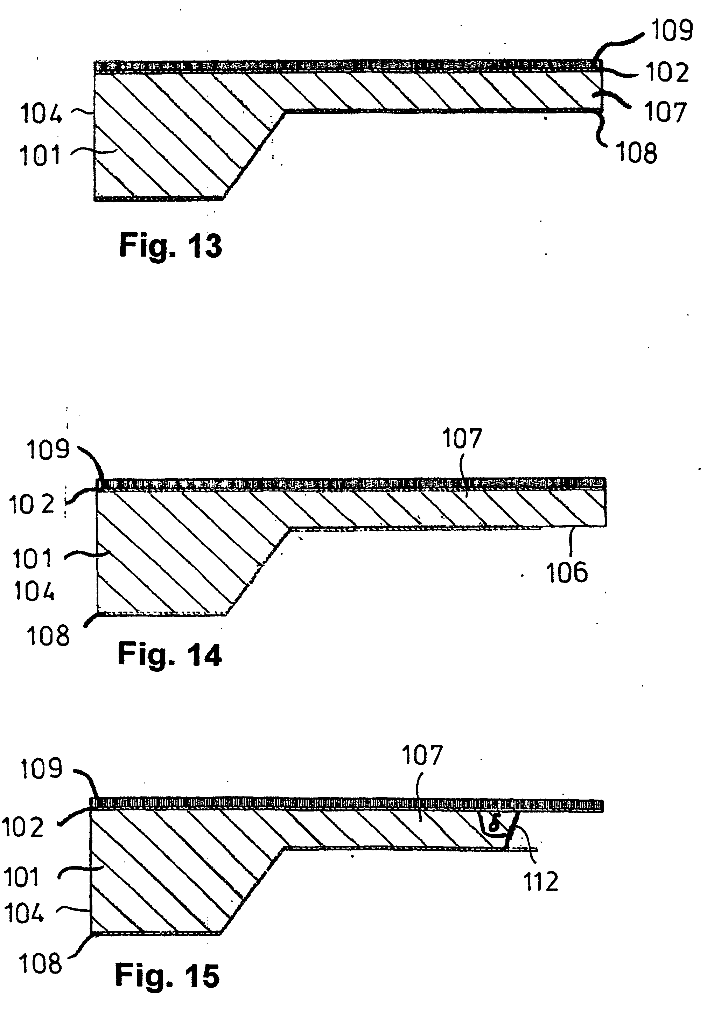

Anschließend erfolgt nach der Entfernung der Schicht 105 die Oxidation des Siliziumwafers, so dass sich auf der Unterseite die Siliziumoxidschicht 108 ausbildet. Auf der Oberseite wird eine Siliziumnitridschicht (SiₓN_{y}) 109 aufgebracht (Figur 13).

Im Unterschied zu dem vorstehend beschriebenen Ausführungsbeispiel wird erst jetzt die Maske zur Herstellung des eigentlichen Cantilevers erzeugt, in dem, beispielsweise im Sprühbelackungsverfahren, ein Photolack auf die Waferunterseite aufgebracht und strukturiert wird, vorzugsweise mittels Projektionslithographie. Die Photomaske wird auf die Siliziumoxidschicht 108 übertragen, wobei die Siliziumnitridschicht 109 auf der Waferoberseite abgedünnt wird. Das Ergebnis dieses Schrittes ist in der Figur 14 gezeigt, aus der am Ende der Siliziummembran 107 ein von der Siliziumoxidschicht 108 befreiter Bereich 106 ersichtlich ist.

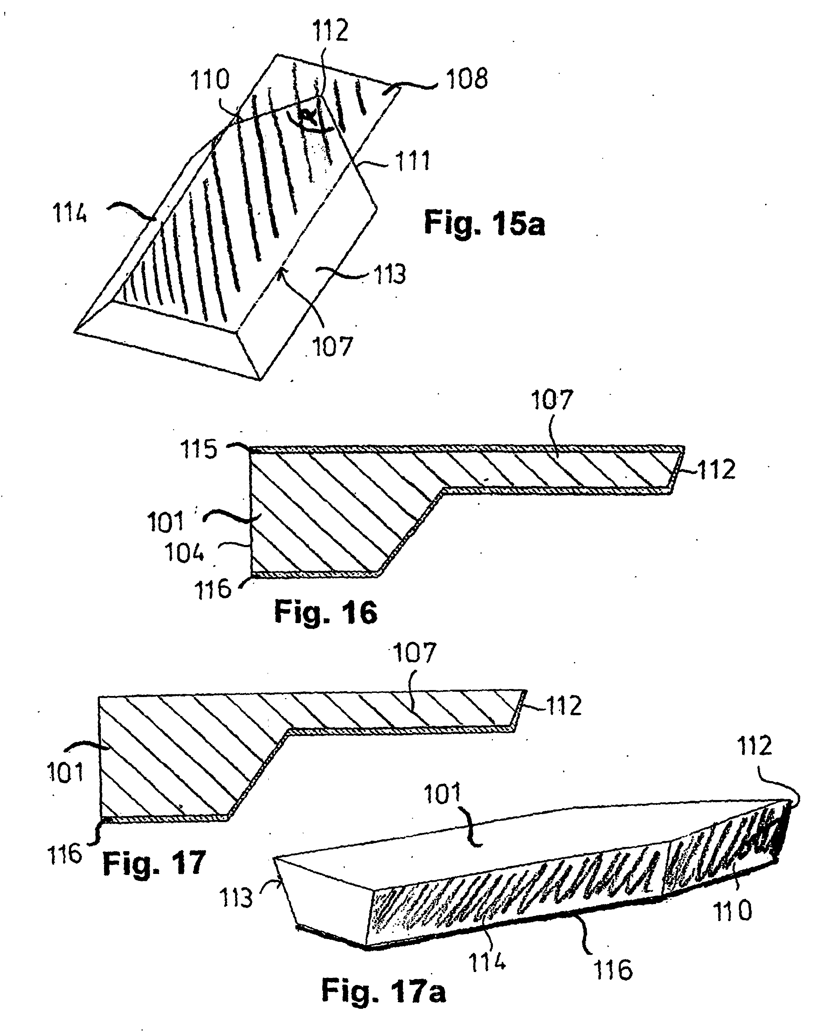

Im nachfolgenden Schritt erfolgt die Herstellung des Cantilevers entsprechend wie in dem zuvor diskutierten Ausführungsbeispiel durch teilweises Entfernen der Siliziummembran in einem Nassätzschritt, beispielsweise mittels einer KOH-Lösung. Auch hier erfolgt entsprechend eine Unterätzung der durch die Siliziumoxidschicht 108 gebildeten Cantilevermaske, die in die (110)-Kristallebenenrichtung zeigt. Der sich dabei ausbildende Cantilever wird am Ende 112 aus zwei sich schneidenden, langsam ätzenden Kristallebenen (im Ausführungsbeispiel (014)-Kristallebenen) 110 und 111 begrenzt, die einen Winkel α von ungefähr 62° bilden. Dies ist aus der Figur 15a ersichtlich, die die Siliziummembran 107 für den späteren Cantilever in einer perspektivischen Darstellung von der Unterseite zeigt. Die Schnittgerade 112 dieser Ebenen bildet mit der die Cantileveroberseite begrenzenden (100)-Kristallebene einen Winkel δ, der ungefähr 70° beträgt. Die Seitenflächen 113 und 114 bestehen ebenfalls wiederum aus (111)-Kristallebenen. Dies ist ebenfalls in den Figuren 15 bzw. 15a dargestellt. Auch hier kann damit die Sensorspitze reproduzierbar hergestellt werden.

Alternativ kann der Cantilever nur vorstrukturiert werden, ohne dass die Siliziummembran 107 durchgeätzt wird, und somit der Siliziumwafer noch geschlossen bleiben. Dies kann geschehen, indem eine zu Anfang ausreichende Dicke des Siliziummembran gewählt wird.

Im nächsten Schritt werden wiederum, wie auch im vorstehenden Ausführungsbeispiel, alle Siliziumoxid- und Siliziumnitridschichten 102, 108, 109 entfernt und auf der Waferoberseite eine Siliziumoxidschicht 115 und auf der Unterseite eine Siliziumoxidschicht 116 aufgebracht, die auch die schrägen Flächen 110, 111, 113, 114 sowie die Kante 112 überdecken. Das Ergebnis ist in Figur 16 dargestellt.

Dieser vorstrukturierte Siliziumwafer wird nun einem gerichteten Trockenätzschritt zur Entfernung von bestimmten Teilen der aufgebrachten Siliziumoxidschichten 115, 116 unterzogen. Der Trockenätzschritt wird dabei so gewählt, dass die Siliziumoxidschicht 115 von der die Cantileveroberseite begrenzenden (100)-Kristallebene entfernt wird. Alle Seitenflächen 110, 111, 113, 114 bleiben von der Siliziumoxidschicht bedeckt. Auch die Siliziumoxidschicht 116 bleibt erhalten. Das Ergebnis ist in den Figuren 17 und 17a dargestellt und zeigt die noch mit Siliziumoxid bedeckten Flächen.

Alternativ kann hier im Falle der vorstehend angegebenen Variante, bei der die Siliziummembran nicht durchgeätzt wird, nur das Siliziumoxid von der Waferoberseite entfernt werden.

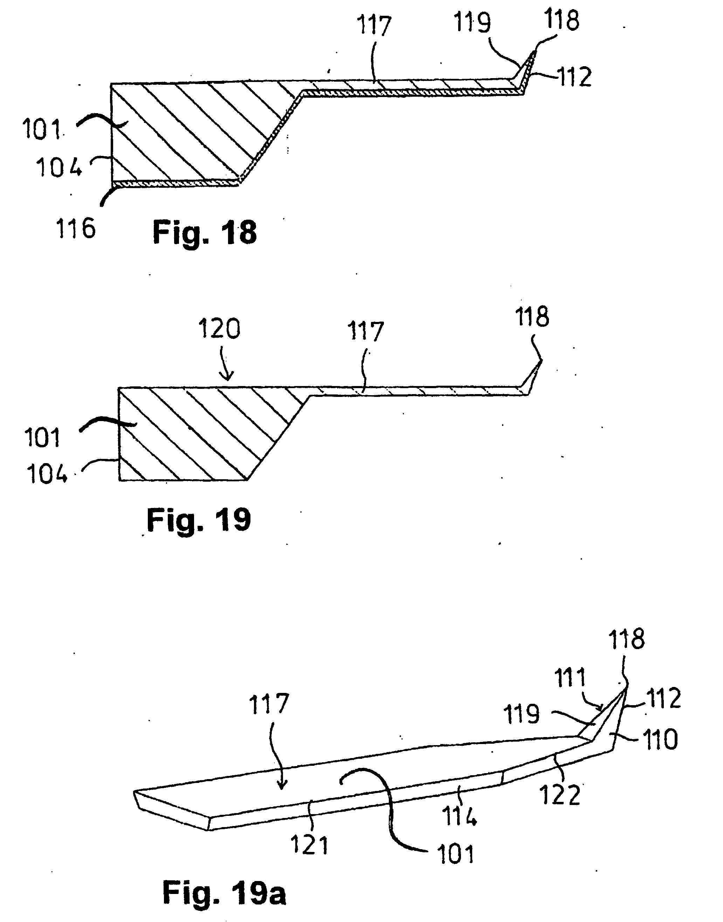

Im nachfolgenden nasschemischen Ätzschritt wird der Cantilever 117 auf die gewünschte Dicke abgedünnt. Am freien Ende des Cantilevers bildet sich dabei eine Sensorspitze 118 aus, die durch drei Flächen 110, 111, 119 begrenzt wird. Die zwei Flächen 110, 111 sind Teile der sich schneidenden Ebenen bei der Ausbildung der Cantileverspitze gemäß Figur 15 und 15a. Die dritte Ebene besteht aus einer sich beim Abdünnen der Siliziummembran 107 ausbildenden (111)-Kristallebene 119 (Figur 18).

Zuletzt wird die verbleibende Siliziumoxidschicht 116 auf der Unterseite sowie auf den Seitenflächen 110, 111, 113, 114 und an der Kante 112 entfernt, so dass sich ein SPM-Sensor 120 gemäß Figur 19 ausbildet. Der entsprechende Cantilever 117 ist in der Figur 19a gezeigt.

In beiden Ausführungsbeispielen weisen die beiden langsam ätzenden Flächen 10, 11 bzw. 110, 111 von dem Cantilever 17, bzw. 117 weg, während die dritte die Spitze 18 bzw. 118 formende (111)-Kristallebene 19 bzw. 119 in Richtung Cantilever 17 bzw. 117 zeigt. Die in den Figuren 9a bzw. 19a dargestellten Cantilever 17, 117 weisen einen rechteckigen Bereich 21 bzw. 121 auf, an den sich ein spitz zulaufender Spitzenbereich 22 bzw. 122 mit der Sensorspitze 18 bzw. 118 anschließt.

Die Krümmung der Kante 112 und der sich daraus ergebende Winkel zur Cantileveroberseite richtet sich nach der Temperatursteuerung und/oder der Konzentration der Ätzchemikalien. Durch geringfügige Parameteränderungen kann der Winkel zwischen 60° und 80° liegen.

Die typische Höhe der Sensorspitze 18, 118 liegt im Bereich von 5 - 25 µm und die Dicke des Cantilevers 17, 117 im Bereich von 0,5-10 µm. Das Waferausgangsmaterial hat eine Dicke von 300 - 500 µm und die Siliziumoxidund Siliziumnitridschichten liegen im Bereich von wenigen 100 nm.

## Patentansprüche

1. Monolithischer SPM-Sensor (20, 120) bestehend aus einem Halteelement (4, 104), Cantilever (17, 117) und einer aus der Oberfläche des Cantilevers herausragenden dreiflächigen Sensorspitze (18, 118) am freien Ende des Cantilevers, wobei das Halteelement (4, 104), der Cantilever (17, 117) und die dreiflächige Sensorspitze (18, 118) aus einem (100)-Siliziummonokristall bestehen.

2. SPM-Sensor nach Anspruch 1 mit
dem Cantilever (17, 117) aus (100)-Silizium mit einem in Draufsicht rechteckigen Armbereich (21, 121) und einem daran anschließenden spitz zulaufenden dreieckigen Spitzenbereich (22, 122), wobei der Spitzenbereich (22, 122) durch schräge (014)-Kristallebenen (10, 11; 110, 111) gebildet wird, und
die auf der Oberseite des Cantilevers (17, 117) angeordneten Sensorspitze (18, 118) aus (100)-Silizium, die aus drei Flächen besteht, von denen zwei Flächen (10, 11; 110, 111) von dem Cantilever (17, 117) weg und eine Fläche (19, 119) in Richtung Armbereich (21, 121) zeigen, wobei die beiden Flächen durch die beiden schrägen (014)-Kristallebenen (10, 11;110, 111) und die eine dritte Fläche (19, 119) durch eine (111)-Kristallebene bestimmt werden.

3. SPM-Sensor nach Anspruch 2, wobei die Sensorspitze (18) das Ende des Cantilevers 17 nicht überragt.

4. SPM-Sensor nach Anspruch 2, wobei der Armbereich (121) an den Seitenflächen (113, 114) durch (111)-Kristallebenen begrenzt ist.

5. SPM-Sensor nach Anspruch 4, wobei die Sensorspitze (118) das Ende des Cantilever (117) überragt.

6. Verfahren zur Herstellung eines monolithischen SPM-Sensors bestehend aus einem Halteelement (4, 104), Cantilever (17, 117) und einer aus der Oberfläche des Cantilever herausragenden dreiflächigen Sensorspitze (18, 118) am freien Ende des Cantilevers mit den folgenden Schritten:
A Erzeugen einer Sensorstruktur aus einem (100)-Siliziumwafer durch Herstellen eines Halteelements mit einer daran anschließenden Siliziummembran (7, 107) für den Cantilever (17, 117) und die Sensorspitze (18, 118), wobei die Dicke der Siliziummembran mindestens der späteren Höhe der Sensorspitze (18, 118) zuzüglich der endgültigen Dicke des Cantilevers (17, 117) entspricht;
B Gleichzeitiges Herstellen des Cantilevers (17, 117) und zweier Seiten (10,11; 110, 111) der Sensorspitze (18, 118) durch teilweises Entfernen der Siliziummembran (7, 107) durch nasschemisches Ätzen zum Erzeugen von zwei sich schneidenden, langsam ätzenden (014)-Kristallebenen (10, 11; 110, 111) am freien Ende, und von Cantileverseitenflächen (13, 14; 113, 114) aus (111)-Kristallebenen;
C Herstellen des Sensors (20, 120) durch nasschemisches Ätzen und Abdünnen des Cantilevers (17, 117), wobei sich am freien Ende die Sensorspitze (18, 118) endgültig ausbildet, die durch drei Flächen (10, 11, 19; 110, 111, 119) begrenzt wird, wovon zwei Flächen Teile der (014)-Kristallebenen (10, 11, 110, 111) und die dritte Fläche (19, 119) eine (111)-Kristallebene ist.

7. Verfahren nach Anspruch 6, wobei Schritt A folgende Schritte umfasst:
Oxidieren des (100)-Siliziumwafers,
Photolithographisches Erzeugen des Halteelements (4) in der Oxidschicht (3) auf der Waferunterseite;
Photolithographisches Erzeugen des Cantilevers in der Oxidschicht (2) auf der Waferoberseite;
Nasschemisches Ätzen der Waferrückseite zur Herstellung des Halteelements (4) und der Siliziummembran (7) für den Cantilever (17) und die Sensorspitze (18).

8. Verfahren nach Anspruch 7, wobei die Schritte zum Erzeugen des Halteelements (4) und des Cantilevers (17) in der Oxidschicht umfassen:
Abdecken der Wafervorderseite mit einem Schutzlack;
Aufbringen und Strukturieren des Photolacks auf der Waferunterseite, Übertragen der Photomaske und Entfernen der freiliegenden Oxidschicht;
Entfernen des Schutzlackes auf der Wafervorderseite;
Aufbringen und Strukturieren eines Photolacks auf der Wafervorderseite, übertragen des Photolacks und Abdünnen der freiliegenden Oxidschicht; und
Entfernen des Photolacks.

9. Verfahren nach Anspruch 7, wobei Schritt B folgende Schritte umfasst:
Oxidieren des vorstrukturierten Siliziumwafers und Aufbringen einer Siliziumnitridschicht (9) auf der Unterseite;
Abdünnen der Siliziumoxidschicht (2) auf der Oberseite und der Siliziumnitridschicht (9) auf der Unterseite, wobei die aus Siliziumoxid bestehende Maske auf die Oberseite des (100)-Siliziumsubstrats (1) übertragen wird;
Nasschemisches Ätzen und Herausarbeiten der Siliziummembran (7), deren Dicke aus der gewünschten Dicke des zu bildenden Cantilevers (17) zuzüglich der Höhe der Sensorspitze (18) entspricht, und zweier Seiten (10, 11) einer Cantileverspitze (12) durch Unterätzen der Siliziumoxidmaske (2), sowie der Cantileverseitenflächen (13, 14).

10. Verfahren nach Anspruch 9, wobei Schritt C folgende Schritte umfasst:
Entfernen aller Siliziumoxid- und Siliziumnitrid-Schichten;
Oxidieren des vorstrukturierten Siliziumwafers;
Entfernen der Siliziumoxidschicht von der die Cantileveroberseite begrenzenden (100)-Kristallebene und den die Cantileverseitenflächen begrenzenden (111)-Kristallebenen (13, 14) durch einen gerichteten winkelabhängigen Trockenätzschritt, wobei die Seitenflächen (10, 11) der Cantileverspitze (12) mit Siliziumoxid bedeckt bleiben;
Herstellen des Cantilevers (17) mit Sensorspitzen (18) durch Nasschemisches Ätzen und Abdünnen der Siliziummembran (7);
Entfernen der restlichen Siliziumoxidschicht (16).

11. Verfahren nach Anspruch 6, wobei Schritt A folgende Schritte umfasst:
Oxidieren des (100)-Siliziumwafers;
Photolithographisches Erzeugen des Halteelements (104) in der Oxidschicht (103) auf der Waferunterseite;
Nasschemisches Ätzen der Waferunterseite zur Herstellung des Halteelements (104) und der Siliziummembran (107).

12. Verfahren nach Anspruch 11, wobei der Photolithographieschritt umfasst:
Abdecken der Waferoberseite mit einem Schutzlack;
Aufbringen und Strukturieren eines Photolacks auf der Waferunterseite, übertragen der Photomaske und Entfernen der freiliegenden Oxidschicht;
Entfernen des Schutzlackes auf der Waferoberseite.

13. Verfahren nach Anspruch 11, wobei Schritt B folgende Schritte umfasst:
Oxidieren des vorstrukturierten Siliziumwafers und Aufbringen einer Siliziumnitridschicht (109) auf der Waferoberseite;
Aufbringen und Strukturieren eines Photolacks auf die Waferunterseite;
Abdünnen der Siliziumoxidschicht (108) auf der Waferunterseite und der Siliziumnitridschicht (109) auf der Waferoberseite, wobei die aus der Siliziumoxidschicht bestehende Maske auf die Waferunterseite übertragen wird;
Nasschemisches Ätzen und Herausarbeiten der Siliziummembran (107), deren Dicke der gewünschten Dicke des zu bildenden Cantilevers (117) zuzüglich der Höhe der Sensorspitze (118) entspricht, und zweier Seiten (110, 111) einer Cantileverspitze (112) durch Unterätzen der Siliziumoxidmaske, sowie der Cantileverseitenflächen (113, 114).

14. Verfahren nach Anspruch 13, wobei Schritt C folgende Schritte umfasst:
Entfernen aller Siliziumoxid- und Siliziumnitridschichten (109, 108);
Oxidation des vorstrukturierten Siliziumwafers;
Entfernen der Siliziumoxidschicht (115) von der die Oberseite des Cantilever (117) begrenzenden (100)-Kristallebenen durch einen gerichteten Trockenätzschritt;
Herstellen des Cantilevers (117) mit Sensorspitze (118) durch nasschemisches Ätzen und Abdünnen der Siliziummembran (107);
Entfernen der restlichen Siliziumoxid-Schicht.

## Claims

1. A monolithic SPM sensor (20, 120) comprising a holding element (4, 104), cantilever (17, 117) and a three-surface sensor tip (18, 118), which projects out of the surface of the cantilever, at the free end of the cantilever, wherein the holding element (4, 104), the cantilever (17, 117) and the three-surface sensor tip (18, 118) are made from monocrystalline (100)-silicon.

2. The SPM sensor as claimed in claim 1, having
the cantilever (17, 117) made from (100)-silicon with an arm region (21, 121), which is rectangular when seen from above, and an adjoining triangular tip region (22, 122) which tapers to a point, the tip region (22, 122) being formed by inclined, (014)-crystal planes, and
the sensor tip (18, 118), which is arranged on the top side of the cantilever (17, 117), is made from (100)-silicon and comprises three surfaces, of which two surfaces (10, 11; 110, 111) face away from the cantilever (17, 117) and one surface (19, 119) faces toward the arm region (21, 121), the two surfaces being defined by the two inclined, (014)-crystal planes (10, 11; 110, 111), and the one third surface (19, 119) being defined by a (111)-crystal plane.

3. The SPM sensor as claimed in claim 2, in which the sensor tip (18) does not project beyond the end of the cantilever (17).

4. The SPM sensor as claimed in claim 2, in which the arm region (121) is delimited at the side faces (113, 114) by (111)-crystal planes.

5. The SPM sensor as claimed in claim 4, in which the sensor tip (118) projects beyond the end of the cantilever (117).

6. A process for producing a monolithic SPM sensor comprising a holding element (4, 104), cantilever (17, 117) and a three-surface sensor tip (18, 118), which projects out of the surface of the cantilever, at the free end of the cantilever, comprising the following steps:
A fabrication of a sensor structure from a (100)-silicon wafer by producing a holding element with an adjoining silicon membrane (7, 107) for the cantilever (17, 117) and the sensor tip (18, 118), the thickness of the silicon membrane at least corresponding to what will subsequently be the height of the sensor tip (18, 118) plus the final thickness of the cantilever (17, 117);
B simultaneous production of the cantilever (17, 117) and two sides (10, 11; 110, 111) of the sensor tip (18, 118) by partial removal of the silicon membrane (7, 107) by wet-chemical etching for fabrication of two slow-etching (014)-crystal planes (10, 11; 110, 111) which intersect one another, at the free end, and of cantilever side faces (13, 14; 113, 114) from (111)-crystal planes;
C production of the sensor (20, 120) by wet-chemical etching and thinning of the cantilever (17, 117), the sensor tip (18, 118) ultimately being formed at the free end, this sensor tip being delimited by three surfaces (10, 11, 19; 110, 111, 119), of which two surfaces are parts of the (014)-crystal planes (10, 11; 110, 111) and the third surface (19, 119) is a (111)-crystal plane.

7. The process as claimed in claim 6, in which step A comprises the following steps:
oxidation of the (100)-silicon wafer,
photolithographic fabrication of the holding element (4) in the oxide layer (3) on the wafer underside;
photolithographic fabrication of the cantilever in the oxide layer (2) on the wafer top side;
wet-chemical etching of the wafer back surface to produce the holding element (4) and the silicon membrane (7) for the cantilever (17) and the sensor tip (18).

8. The method as claimed in claim 7, in which the steps used to fabricate the holding element (4) and the cantilever (17) in the oxide layer comprise:
covering the wafer front surface with a protective resist;
applying and patterning the photoresist on the wafer underside, transferring the photomask and removing the uncovered oxide layer;
removing the protective resist on the wafer front surface;
applying and patterning a photoresist on the wafer front surface;
transferring the photoresist and thinning the uncovered oxide layer; and removing the photoresist.

9. The process as claimed in claim 7, in which step B comprises the following steps:
oxidizing the pre-patterned silicon wafer and applying a silicon nitride layer (9) to the underside;
thinning the silicon oxide layer (2) on the top side and of the silicon nitride layer (9) on the underside, the mask consisting of silicon oxide being transferred to the top side of the (100)-silicon substrate (1);
wet-chemical etching and machining out of the silicon membrane (7), the thickness of which corresponds to the desired thickness of the cantilever (17) which is to be formed plus the height of the sensor tip (18), and of two
sides (10, 11) of a cantilever tip (12) by undercut etching of the silicon oxide mask (2) and of the cantilever side faces (13, 14).

10. The process as claimed in claim 9, in which step C comprises the following steps:
removal of all the silicon oxide and silicon nitride layers;
oxidation of the pre-patterned silicon wafer;
removal of the silicon oxide layer from the (100)-crystal plane, which delimits the cantilever top side, and the (111)-crystal planes (13, 14), which delimit the cantilever side faces, by means of a targeted, angle-dependent dry etching step, the side faces (10, 11) of the cantilever tip (12) remaining covered with silicon oxide;
production of the cantilever (17) with sensor tips (18) by wet-chemical etching and thinning of the silicon membrane (7);
removal of the remaining silicon oxide layer (16).

11. The process as claimed in claim 6, in which step A comprises the following steps:
oxidation of the (100)-silicon wafer;
photolithographic fabrication of the holding element (104) in the oxide layer (103) on the wafer underside;
wet-chemical etching of the wafer underside for fabrication of the holding element (104) and of the silicon membrane (107).

12. The process as claimed in claim 11, in which the photolithography step comprises:
covering the wafer top side with a protective resist;
applying and patterning a photoresist on the wafer underside, transferring the photomask and removing the uncovered oxide layer;
removing the protective resist on the wafer top side.

13. The process as claimed in claim 11, in which step B comprises the following steps:
oxidation of the pre-patterned silicon wafer and application of a silicon nitride layer (109) to the wafer top side;
application and patterning of a photoresist on the wafer underside;
thinning of the silicon oxide layer (108) on the wafer underside and of the silicon nitride layer (109) on the wafer top side, during which step the mask, which comprises the silicon oxide layer, is transferred to the wafer underside;
wet-chemical etching and machining out of the silicon membrane (107), the thickness of which corresponds to the desired thickness of the cantilever (117) which is to be formed plus the height of the sensor tip (118), and of two sides (110, 111) of a cantilever tip (112) by undercut etching of the silicon oxide mask and of the cantilever side faces (113, 114).

14. The process as claimed in claim 13, in which step C comprises the following steps:
removal of all the silicon oxide and silicon nitride layers (109, 108);
oxidation of the pre-patterned silicon wafer;
removal of the silicon oxide layer (115) from the (100)-crystal planes which delimit the top side of the cantilever (117), by means of a targeted dry etching step;
production of the cantilever (117) with sensor tip (118) by wet-chemical etching and thinning of the silicon membrane (107);
removal of the remaining silicon oxide layer.

## Revendications

1. Capteur pour la SPM monolithique (20, 120) composé d'un élément de retenue (4, 104), d'un cantilever ou micropoutre (17, 117) et d'une pointe de capteur trièdre (18, 118) en saillie par rapport au cantilever à l'extrémité libre du cantilever, dans lequel l'élément de retenue (4, 104), le cantilever (17, 117) et la pointe de capteur trièdre (18, 118) sont constitués d'un monocristal de silicium (100).

2. Capteur pour la SPM selon la revendication 1 avec
le cantilever ou micropoutre (17, 117) en silicium (100) comprenant une zone de bras (21, 121) rectangulaire en vue de dessus et une zone de pointe (22, 122) triangulaire effilée s'y raccordant, la zone de pointe (22, 122) étant formée de plans cristallographiques obliques (014) (10, 11 ; 110, 111), et
la pointe de capteur (18, 118) en silicium (100) disposée sur la face supérieure du cantilever (17, 117), composée de trois faces dont deux faces (10, 11 ; 110, 111) s'écartent du cantilever (17, 117) et une face (19, 119) est dirigée vers la zone de bras (21, 121), les deux premières faces étant déterminées par les deux plans cristallographiques obliques (014) (10, 11 ; 110, 111) et la troisième face (19, 119) par un plan cristallographique (111).

3. Capteur pour la SPM selon la revendication 2, dans lequel la pointe de capteur (18) ne dépasse pas l'extrémité du cantilever (17).

4. Capteur pour la SPM selon la revendication 2, dans lequel la zone de bras (121) est limitée sur les faces latérales (113, 114) par des plans cristallographiques (111).

5. Capteur pour la SPM selon la revendication 4, dans lequel la pointe de capteur (118) dépasse l'extrémité du cantilever (117).

6. Procédé de fabrication d'un capteur pour la SPM monolithique composé d'un élément de retenue (4, 104), d'un cantilever ou micropoutre (17, 117) et d'une pointe de capteur trièdre (18, 118) en saillie par rapport à la surface du cantilever à l'extrémité libre du cantilever, comprenant les étapes suivantes :
A Production d'une structure de capteur à partir d'une tranche de silicium (100) par réalisation d'un élément de retenue avec une membrane en silicium (7, 107) s'y raccordant pour le cantilever (17, 117) et la pointe de capteur (18, 118), l'épaisseur de la membrane en silicium correspondant au moins à la hauteur future de la pointe de capteur (18, 118) plus l'épaisseur définitive du cantilever (17, 117) ;
B Réalisation simultanée du cantilever (17, 117) et de deux faces (10, 11 ; 110, 111) de la pointe de capteur (18, 118) par enlèvement partiel de la membrane en silicium (7, 107) par gravure chimique humide afin de produire deux plans cristallographiques (014) (10, 11 ; 110, 111) se coupant, à gravure lente, à l'extrémité libre, et des faces latérales de cantilever (13, 14 ; 113, 114) constituées de plans cristallographiques (111) ;
C Réalisation du capteur (20, 120) par gravure chimique humide et amincissement du cantilever (17, 117) avec formation définitive de la pointe de capteur (18, 118) limitée par trois faces (10, 11, 19 ; 110, 111, 119) dont deux faces sont des parties des plans cristallographiques (014) (10, 11 ; 110, 111) et la troisième face est un plan cristallographique (111).

7. Procédé selon la revendication 6, dans lequel l'étape A comprend :
oxydation de la tranche de silicium (100) ;
production photolithographique de l'élément de retenue (4) dans la couche d'oxyde (3) sur la face inférieure de la tranche ;
production photolithographique du cantilever dans la couche d'oxyde (2) sur la face supérieure de la tranche ;
gravure chimique humide de la face inférieure de la tranche pour la réalisation de l'élément de retenue (4) et de la membrane en silicium (7) pour le cantilever (17) et la pointe de capteur (18).

8. Procédé selon la revendication 7, dans lequel les étapes de production de l'élément de retenue (4) et du cantilever (17) dans la couche d'oxyde comprennent :
recouvrement de la face supérieure de la tranche avec une laque protectrice ;
application et structuration d'une laque photosensible sur la face inférieure de la tranche, report du photomasque et enlèvement de la couche d'oxyde à découvert ;
enlèvement de la laque protectrice sur la face supérieure de la tranche ;
application et structuration d'une laque photosensible sur la face supérieure de la tranche, report de la laque photosensible et amincissement de la couche d'oxyde à découvert ; et
enlèvement de la laque photosensible.

9. Procédé selon la revendication 7, dans lequel l'étape B comprend :
oxydation de la tranche de silicium préstructurée et application d'une couche de nitrure de silicium (9) sur la face inférieure ;
amincissement de la couche d'oxyde de silicium (2) sur la face supérieure et de la couche de nitrure de silicium (9) sur la face inférieure, le masque constitué d'oxyde de silicium étant reporté sur la face supérieure du substrat de silicium (100) (1) ;
gravure chimique humide et façonnage de la membrane en silicium (7), dont l'épaisseur correspond à l'épaisseur souhaitée du cantilever (17) à former plus la hauteur de la pointe de capteur (18), de deux faces (10, 11) d'une pointe de cantilever (12) par sous-gravure du masque d'oxyde de silicium (2), ainsi que des faces latérales de cantilever (13, 14).

10. Procédé selon la revendication 9, dans lequel l'étape C comprend :
enlèvement de toutes les couches d'oxyde de silicium et de nitrure de silicium ;
oxydation de la tranche de silicium préstructurée ;
enlèvement de la couche d'oxyde de silicium du plan cristallographique (100) limitant la face supérieure du cantilever et des plans cristallographiques (111) (13, 14) limitant les faces latérales du cantilever par une étape de gravure sèche orientée, fonction de l'angle, les faces latérales (10, 11) de la pointe de cantilever (12) restant recouvertes d'oxyde de silicium ;
réalisation du cantilever (17) avec pointe de capteur (18) par gravure chimique humide et amincissement de la membrane en silicium (7) ;
enlèvement de la couche d'oxyde de silicium restante (16).

11. Procédé selon la revendication 6, dans lequel l'étape A comprend :
oxydation de la tranche de silicium (100) ;
production photolithographique de l'élément de retenue (104) dans la couche d'oxyde (103) sur la face inférieure de la tranche ;
gravure chimique humide de la face inférieure de la tranche pour la réalisation de l'élément de retenue (104) et de la membrane en silicium (107).

12. Procédé selon la revendication 11, dans lequel l'étape photolithographique comprend :
recouvrement de la face supérieure de la tranche avec une laque protectrice ;
application et structuration d'une laque photosensible sur la face inférieure de la tranche, report du photomasque et enlèvement de la couche d'oxyde à découvert ;
enlèvement de la laque protectrice sur la face supérieure de la tranche.

13. Procédé selon la revendication 11, dans lequel l'étape B comprend :
oxydation de la tranche de silicium préstructurée et application d'une couche de nitrure de silicium (109) sur la face supérieure ;
application et structuration d'une laque photosensible sur la face inférieure de la tranche ; amincissement de la couche d'oxyde de silicium (108) sur la face inférieure et de la couche de nitrure de silicium (109) sur la face supérieure, le masque constitué de la couche d'oxyde de silicium étant reporté sur la face inférieure de la tranche ;
gravure chimique humide et façonnage de la membrane en silicium (107), dont l'épaisseur correspond à l'épaisseur souhaitée du cantilever (117) à former plus la hauteur de la pointe de capteur (118), de deux faces (110, 111) d'une pointe de cantilever (112) par sous-gravure du masque d'oxyde de silicium (2), ainsi que des faces latérales de cantilever (113, 114).

14. Procédé selon la revendication 13, dans lequel l'étape C comprend :
enlèvement de toutes les couches d'oxyde de silicium et de nitrure de silicium (109, 108) ;
oxydation de la tranche de silicium préstructurée ;
enlèvement de la couche d'oxyde de silicium (115) du plan cristallographique (100) limitant la face supérieure du cantilever (117) par une étape de gravure sèche orientée ;
réalisation du cantilever (117) avec pointe de capteur (118) par gravure chimique humide et amincissement de la membrane en silicium (107) ;
enlèvement de la couche d'oxyde de silicium restante.
